# EUROPÄISCHE PATENTSCHRIFT

(11) **EP 2 128 564 B1**
(45) Veröffentlichungstag und Bekanntmachung des Hinweises auf die Patenterteilung: **19.12.2012**
(21) Anmeldenummer: 09100281.6
(22) Anmeldetag: 14.05.2009
(51) Int. Cl.: G01C 9/28, G01D 11/24

(54) **Sensorgehäuse**
Sensor casing
Boîtier de capteur

(30) Priorität: 30.05.2008 DE 202008007291 U
(43) Veröffentlichungstag der Anmeldung: 02.12.2009
(73) Patentinhaber: Inter Control Hermann Köhler GmbH & Co. KG, 90411 Nürnberg (DE)
(72) Erfinder: WOLF, Roland, D-91217 Hersbruck (DE)
(74) Vertreter: Pätzold, Herbert

(56) Entgegenhaltungen:
- US-A- 3 952 142
- US-A- 4 949 467

## Beschreibung

Die vorliegende Erfindung bezieht sich auf ein Sensorgehäuse und insbesondere auf ein Sensorgehäuse für ein Inklinometer.

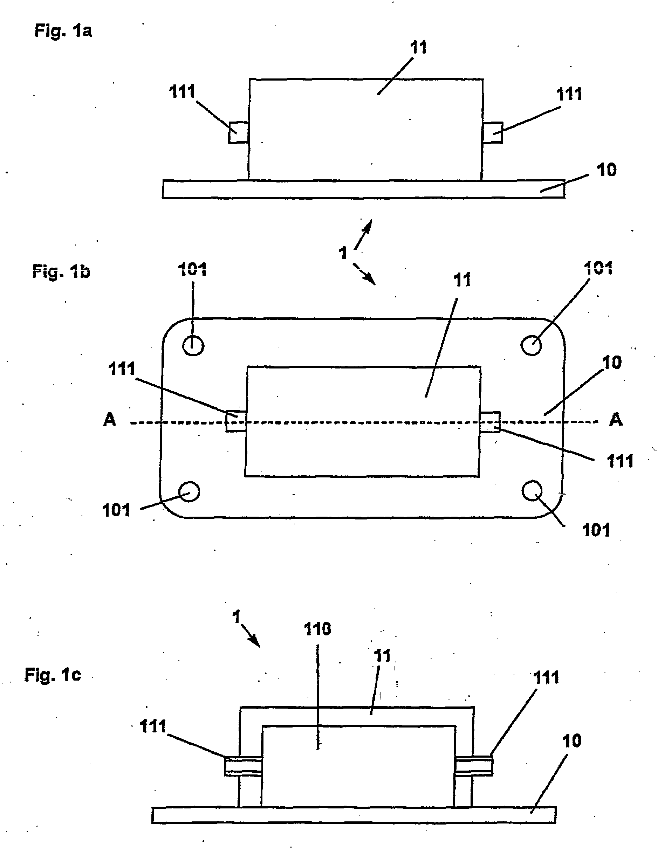

Aus dem Stand der Technik sind Gehäuse 1 zur Aufnahme von Inklinometern bekannt, die zur Anordnung an einer vorbestimmten Position eine Grundplatte 10 mit Befestigungsbohrungen 101 umfassen. Ein derartiges bekanntes Sensorgehäuse 1 mit einem Gehäusekörper 11, einer Grundplatte 10 und mit Ausnehmungen 111 zur Aufnahme von Steckverbindungen für den Anschluß von beispielsweise Signalleitungen ist schematisch in Fig. 1 dargestellt. Eine exakte Ausrichtung des Sensors bei der Montage des Sensorgehäuses 1 mit der Grundplatte 10 an einer vorbestimmten Position ist nur mit erheblichen Justierungs- und Montageaufwand möglich, was zeit- und kostenaufwendig ist.

Aufgabe der vorliegenden Erfindung ist daher, ein verbessertes Sensorgehäuse für ein Inklinometer bereitzustellen, das kostengünstig, zeitsparend und exakt bereitgestellt und montiert werden kann.

Die Aufgabe der vorliegenden Erfindung wird mit den Merkmalen des unabhängigen Anspruchs 1 gelöst. Vorteilhafte Ausführungen der vorliegenden Erfindung werden mit den Merkmalen der abhängigen Ansprüche erzielt und/oder in der nachfolgenden Beschreibung erwähnt.

Ein erfindungsgemäßes Sensorgehäuse für ein Inklinometer umfasst insbesondere einen Gehäusekörper, der nach unten offen ist, so dass der Gehäuseinnenraum nach unten frei liegt und mit dem Gehäusekörper einstückig ausgebildete Füße, an denen jeweils Befestigungsbohrungen zur Befestigung des Sensorgehäuses an einer vorbestimmten Position vorgesehen sind. umfasst das Erfindungsgemäß Sensorgehäuse außerdem an der Unterseite des Gehäuses und/oder der Füße drei Auflagevorsprünge zur Ausrichtung des Sensorgehäuses an einer vorbestimmten Auflageposition. Durch die erfindungsgemäßen drei Auflagevorsprünge wird eine definierte Drei-Punkt-Auflage unabhängig der Anzahl von Befestigungen an den Befestigungsbohrungen der Füße, die die Anzahl der drei Auflagevorsprünge vorteilhaft übersteigen können, bereitgestellt.

Besonders vorteilhaft sind bei einem erfindungsgemäßen Sensorgehäuse außerdem die Füße elastisch ausgebildet, so dass die Befestigungszonen an den Befestigungsbohrungen der Füße elastisch mit dem Gehäusekörper verbunden sind, der die Sensorik beinhaltet. Hierdurch ist eine exakte Ausrichtung des Sensorgehäuses und des Sensors insbesondere durch die definierte Drei-Punkt-Auflage und die Entkopplung der Sensorik von bei der Befestigung auftretenden Spannungen möglich.

Nach einer weiteren vorteilhaften Ausführung der vorliegenden Erfindung sind die Füße geeigneter Weise als flache Vorsprünge ausgebildet, die sich in einer Ebene mit der Unterseite des Gehäusekörpers von dem Gehäusekörper ausgehend um einen vorbestimmten Betrag in eine vorbestimmte Richtung erstrecken, wobei an dem Gehäusekörper vorteilhaft drei oder mehr Füße mit jeweils einer Befestigungsbohrung und besonders vorteilhaft vier Füße mit jeweils einer Befestigungsbohrung vorgesehen sind.

Geeigneter Weise ist hierbei insbesondere der Gehäuseinnenraum quaderförmig ausgebildet und sind geeigneter Weise vier Füße in der Umgebung der Ecken des Gehäuses angeordnet.

Die vorliegende Erfindung wird nachfolgend ohne jede Beschränkung anhand von vorteilhaften Ausführungen beschrieben, wobei die Beschreibung von schematischen Zeichnungen begleitet ist. Hierzu zeigt:
Fig. 1a eine Seitenansicht eines herkömmlichen Sensorgehäuses, Fig. 1b eine Draufsicht auf das Sensorgehäuse von Fig. 1a und Fig. 1c einen Schnitt durch das Sensorgehäuse von Fig. 1a und 1b entlang der Linie A-A von Fig. 1b;
Fig. 2a eine Seitenansicht eines erfindungsgemäßen Sensorgehäuses, Fig. 2b eine Draufsicht auf das erfindungsgemäße Sensorgehäuse von Fig. 2a, Fig. 2c einen Schnitt durch das Sensorgehäuse von Fig. 2a und 2b entlang der Linie A-A von Fig. 2b und Fig. 2d das Sensorgehäuse von Fig. 2a, 2b und 2c von unten;
Fig. 3a eine perspektivische Darstellung des Sensorgehäuses von Fig. 2 von oben und Fig. 3b eine perspektivische Darstellung des Sensorgehäuses von Fig. 2 von unten.

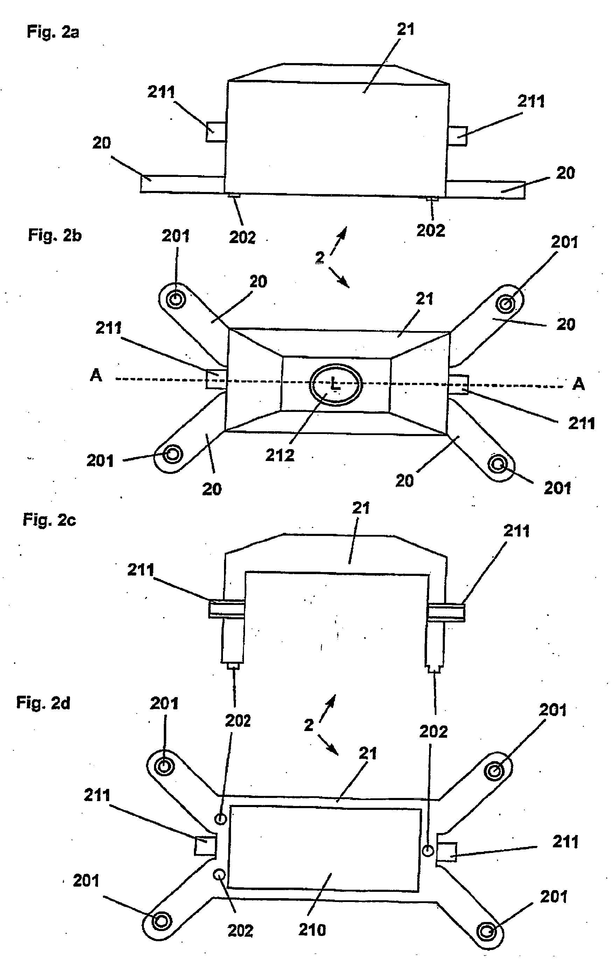

Ein erfindungsgemäßes Sensorgehäuse 2 von Fig. 2a, b, c und d umfasst vorteilhaft einen Gehäusekörper 21 mit flachen Füßen 20, die sich als flache Vorsprünge ausgebildet in einer Ebene mit der Unterseite des Gehäusekörpers 21 von dem Gehäusekörper 21 ausgehend um einen vorbestimmten Betrag in eine vorbestimmte Richtung erstrecken, wobei an den flachen Füßen 20 geeignete Bohrungen 201 vorgesehen sind, über die das Sensorgehäuse 2 mit geeigneten Befestigungsmitteln, wie beispielsweise Schrauben an einer vorbestimmten Position befestigt werden kann. Hierbei sind erfindungsgemäß an der Unterseite des Gehäusekörpers 21 und/oder an den Füßen 20 drei Auflagevorsprünge 202 zur Ausrichtung des Sensorgehäuses 2 an einer vorbestimmten Auflageposition vorgesehen.

Vorteilhaft umfasst ein erfindungsgemäßes Sensorgehäuse 2 einen Gehäusekörper 21, der mit den Füßen 20 einstückig ausgebildet ist, was insbesondere die Herstellung und auch die Montage des Sensorgehäuses 2 vereinfacht.

Für eine Bereitstellung einer definierten Drei-Punkt-Auflage umfasst ein erfindungsgemäßes Sensorgehäuse 2 außerdem wenigstens drei oder mehr Füße 20 mit geeigneten Bohrungen 201, wobei bei der Ausführung von Fig.2, insbesondere vorteilhaft vier Füße 20 vorgesehen sind, die geeigneter Weise in der Nähe der Kanten des bei der Ausführung von Fig.2 vorteilhaft quaderförmig ausgebildeten Gehäusekörpers 21 angeordnet sind.

Die Füße 20 sind außerdem vorteilhaft elastisch ausgebildet, so daß sie mit den Auflagevorsprüngen 202 an der Unterseite des Gehäusekörpers 21 oder der Füße 20 zusammenwirken, um eine exakte und sichere Ausrichtung und Befestigung des Sensors zu ermöglichen, wobei die Sensorik von bei der Befestigung entstehenden Spannungen entkoppelt ist. Es ist klar, daß eine geeignete Befestigung beispielsweise mit einer Schraubbefestigung bereitgestellt werden kann.

Es ist außerdem klar, dass ein erfindungsgemäßes Sensorgehäuse 2 außerdem geeignete Ausnehmungen 211 zur Aufnahme von Steckverbindungen für beispielsweise Signalleitungen an dem Gehäusekörper 21 zur Verbindung von beispielsweise Signalleitungen umfasst.

Das erfindungsgemäße Sensorgehäuse 2 von Fig. 2 ist außerdem vorteilhaft und erfindungsgemäß nach unten offen, wodurch auf einfach Weise eine geeignete Sensorik in dem Gehäusekörper 21 angeordnet werden kann und daran anschließend mit einer Vergußmasse versiegelt werden kann, die auf einfache Weise in den Gehäuseinnenraum 210 eingefüllt werden kann, wodurch die Entstehung von Lufteinschlüssen insbesondere an kritischen Stellen weitestgehend ausgeschlossen werden kann, was außerdem die Verdrehsicherheit von in den Ausnehmungen 211 angeordneten Steckverbindungen erhöht und so die Ausfallsicherheit des Sensors erhöht.

Die Oberseite des erfindungsgemäßen Sensorgehäuses 2 von Fig.2 ist außerdem vorteilhaft als abgestumpfte vierflächige Pyramide ausgebildet, so daß fünf in einem Winkel zueinander angeordnete Ebenen bereitgestellt sind. Hierbei ist die Oberfläche der Oberseite des Gehäusekörpers 21 geeigneter Weise mit einer reliefartigen Struktur 212 versehen, die derart ausgebildet ist, daß sie nach einer Lackierung des Gehäusekörpers 21 erkennbar bleibt, wobei die reliefartige Struktur 212 geeigneter Weise ein Firmenlogo und/oder Positionierungsmarkierungen umfassen kann, die jeweils an einer oder mehreren der fünf Ebenen der Gehäuseoberfläche der Oberseite des Gehäusekörpers 21 angeordnet sind.

Die Bohrungen 201 an den Füßen 20 können für eine sichere Befestigung und einen sicheren Halt geeigneter Weise mit Metalleinsätzen versehen sein, die insbesondere Stahleinsätze sein können, was bei einer Befestigung mittels beispielsweise Schrauben und einer entsprechenden Spannung beim Anziehen der Schrauben und beim elastischen Verbiegen der Füße 20 aufgrund der definierten Drei-Punkt-Auflage aufgrund der erfindungsgemäßen Auflagevorsprünge 202 die Stabilisierung der Befestigung erhöht und die Montage erleichtert.

Ein erfindungsgemäßes Sensorgehäuse 2 kann geeigneter Weise aus Metall oder Kunststoff bereitgestellt sein.

Auf die nach unten freiliegende Oberfläche der Vergußmasse in dem Gehäuseinnenraum 210, in der die Sensorik eingebettet ist, kann geeigneter Weise und vorteilhaft ein Typenschild aufgeklebt sein.

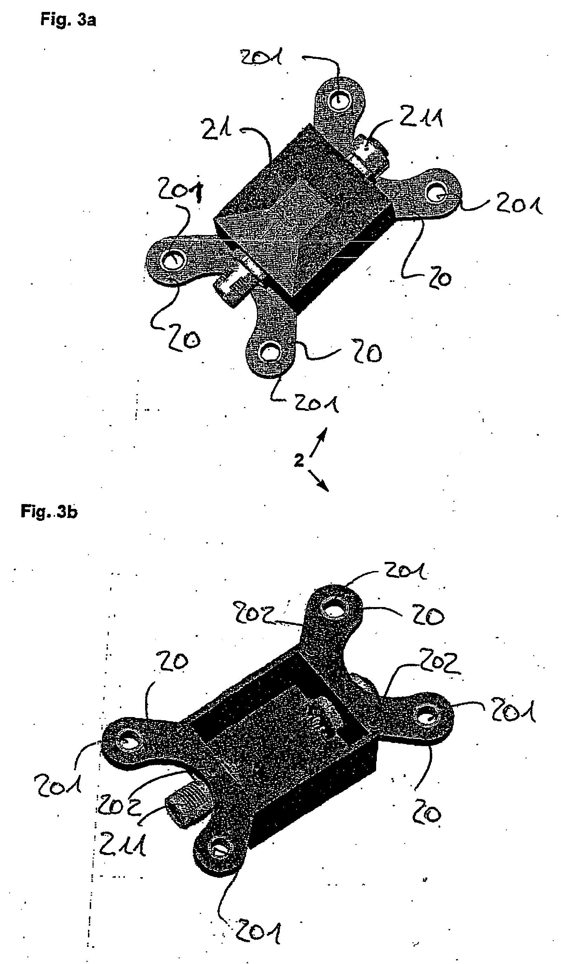

Fig.3a zeigt zum besseren Verständnis der vorliegenden Erfindung eine schematische perspektivische Darstellung des Sensorgehäuses von Fig. 2 von oben und Fig.3b eine entsprechende schematische perspektivische Darstellung des Sensorgehäuses 2 von Fig. 2 von unten, wobei wie auch schon Fig. 2d entnommen werden kann der Gehäuseinnenraum 210 geeigneter Weise quaderförmig ausgebildet ist.

### Bezugszeichenliste

- Sensorgehäuse: 1
- Grundplatte: 10
- Befestigungsbohrung: 101
- Gehäusekörper: 11
- Gehäuseinnenraum: 110
- Ausnehmung: 111

- Sensorgehäuse: 2
- Fuß: 20
- Befestigungsbohrung: 201
- Auflagevorsprung: 202
- Gehäusekörper: 21
- Gehäuseinnenraum: 210
- Ausnehmung: 211
- Reliefartige Struktur: 212

## Patentansprüche

1. Sensorgehäuse (2) für ein Inklinometer mit einem Gehäusekörper (21) der nach unten offen ist, so daß der Gehäuseinnenraum (210) nach unten freiliegt und mit dem Gehäuse (21) einstückigen Füßen (20) an denen jeweils eine Befestigungsbohrung (201) vorgesehen ist, zur Befestigung des Sensorgehäuses(2) an einer vorbestimmten Position, wobei an der Unterseite des Gehäusekörpers (21) und/oder den Füßen (20) drei Auflagevorsprünge (202) zur Ausrichtung des Sensorgehäuses (2) an einer vorbestimmten Auflageposition vorgesehen sind.

2. Sensorgehäuse (2) nach Anspruch 1, wobei:
in den Befestigungsbohrungen (201) zur Verstärkung und Sicherung der Befestigung ringförmige Metalleinsätze vorgesehen , sind.

3. Sensorgehäuse (2), nach einem der vorstehenden Ansprüche 1 oder 2, wobei:
die Füße (20) elastisch ausgebildet, sind.

4. Sensorgehäuse (2) nach einem der vorstehenden Ansprüche 1 bis 3, wobei:
die Füße (20) als flache Vorsprünge ausgebildet sind, die sich in einer Ebene mit der Unterseite des Gehäusekörpers (21) von dem Gehäusekörper (21) ausgehend um einen vorbestimmten Betrag in eine vorbestimmte Richtung erstrecken.

5. Sensorgehäuse (2) nach einem der vorstehenden Ansprüche 1 bis 4, wobei:
an dem Gehäusekörper (21) vier Füße (20) vorgesehen, sind.

6. Sensorgehäuse (2) nach einem der vorstehenden Ansprüche 1 bis 5, wobei:
der Gehäusekörper (21) quaderförmig ausgebildet ist, und die Füße (20) in der Umgebung der Ecken des Gehäusekörpers (21) angeordnet, sind.

7. Sensorgehäuse (2) nach einem der vorstehenden Ansprüche 1 bis 6, wobei:
die Oberseite des Gehäusekörpers (21) eine reliefartige Struktur (212), umfaßt, die derart ausgebildet ist, daß sie nach einer Lackierung des Gehäusekörpers (21) erkennbar bleibt.

8. Sensorgehäuse (2) nach Anspruch 7, wobei:
die reliefartige Struktur (212) ein Firmenlogo und/oder Positionierungsmarkierungen, umfaßt.

9. Sensorgehäuse (2) nach einem der Ansprüche 1 bis 8, wobei:
die Oberseite des Gehäusekörpers (21) als abgeflachte Pyramide ausgebildet, ist.

10. Sensorgehäuse (2) nach einem der Ansprüche 1 bis 9, wobei:
der Gehäuseinnenraum (210) quaderförmig ausgebildet, ist.

11. Sensorgehäuse (2) nach einem der Ansprüche 1 bis 10, wobei:
der Gehäusekörper (21) mit den Füßen (20) aus Metall oder Kunststoff, besteht.

12. Sensorgehäuse (2) nach einem der Ansprüche 1 bis 11 mit einem in dem Gehäusekörper (21) angeordneten Inklinometer das von unten in den (210) eingesetzt ist und in Vergußmasse eingebettet ist. Gehäuseinneraum

13. Sensorgehäuse (2) nach Anspruch 12 mit einem auf die nach unten frei liegende Oberfläche der Vergußmasse aufgeklebtem Typenschild.

## Claims

1. Sensor casing (2) for an inclinometer comprising a casing body (21) which is open at the bottom, so that the casing interior (210) is exposed at the bottom, and comprising feet (20) integral with the casing (21), one respective fastening bore (201) being provided on said feet for fastening the sensor casing (2) in a predetermined position, wherein three bearing projections (202) are provided on the underside of the casing body (21) and/or the feet (20) for aligning the sensor casing (2) in a predetermined bearing position.

2. Sensor casing (2) according to Claim 1 wherein annular metal inserts are provided in the fastening bores (201) for reinforcing and securing the fastening.

3. Sensor casing (2) according to one of the preceding Claims 1 or 2 wherein the feet (20) are of resilient configuration.

4. Sensor casing (2) according to one of the preceding Claims 1 to 3 wherein the feet (20) are configured as planar projections which, starting from the casing body (21), extend by a predetermined amount in a predetermined direction in a plane with the underside of the casing body (21).

5. Sensor casing (2) according to one of the preceding Claims 1 to 4 wherein four feet (20) are provided on the casing body (21).

6. Sensor casing (2) according to one of the preceding Claims 1 to 5 wherein the casing body (21) is of cuboidal configuration and the feet (20) are arranged in the vicinity of the corners of the casing body (21).

7. Sensor casing (2) according to one of the preceding Claims 1 to 6 wherein the upper face of the casing body (21) comprises a relief-type structure (212) which is configured such that it remains visible after painting the casing body (21).

8. Sensor casing (2) according to Claim 7 wherein the relief-type structure (212) comprises a company logo and/or positional markings.

9. Sensor casing (2) according to one of Claims 1 to 8 wherein the upper face of the casing body (21) is configured as a flattened pyramid.

10. Sensor casing (2) according to one of Claims 1 to 9 wherein the casing interior (210) is of cuboidal configuration.

11. Sensor casing (2) according to one of Claims 1 to 10 wherein the casing body (21) together with the feet (20) consist of metal or plastics material.

12. Sensor casing (2) according to one of Claims 1 to 11 comprising an inclinometer which is arranged in the casing body (21) and which is inserted from below into the casing interior (210) and is embedded in sealing compound.

13. Sensor casing (2) according to Claim 12 comprising a label adhesively bonded to the surface of the sealing compound which is exposed at the bottom.

## Revendications

1. Boîtier de capteur (2) pour un inclinomètre avec un corps de boîtier (21) qui est ouvert vers le bas de sorte que le compartiment interne du boîtier (210) se trouve ouvert vers le bas et avec le boîtier (21), des pieds monoblocs (20) sur lesquels est à chaque fois prévu un alésage de fixation (201) pour fixer le boîtier du capteur (2) dans une position prédéfinie pour lequel sur la face inférieure du corps de boîtier (21) et/ou les pieds (20) sont prévues trois parties d'appui en saillie (202) pour orienter le boîtier de capteur (2) dans une position d'appui prédéfinie.

2. Boîtier de capteur (2) selon la revendication1 pour lequel des inclusions métalliques circulaires sont prévues dans les alésages de fixation (201) pour renforcer et assurer la fixation.

3. Boîtier de capteur (2) selon une des revendications précédentes 1 à 2 pour lequel les pieds (20) sont constitués de façon élastique.

4. Boîtier de capteur (2) selon une des revendications précédentes 1 à 3 pour lequel les pieds (20) sont constitués comme des parties en saillie plates qui s'étendent dans un plan d'une quantité prédéfinie dans un sens prédéfini avec la face inférieure du boîtier de capteur (21) partant du corps de boîtier (21).

5. Boîtier de capteur (2) selon une des revendications précédentes 1 à 4 pour lequel quatre pieds (20) sont prévus sur le corps de boîtier (21).

6. Boîtier de capteur (2) selon une des revendications précédentes 1 à 5 pour lequel le corps de boîtier (21) est conçu de forme parallélépipédique et les pieds (20) sont disposés au voisinage des coins du corps de boîtier (21).

7. Boîtier de capteur (2) selon une des revendications précédentes 1 à 6 pour lequel la face supérieure du corps de boîtier (21) comprend une structure (212) de type en relief qui est constituée de telle sorte qu'elle reste identifiable après une peinture du corps de boîtier (21).

8. Boîtier de capteur (2) selon la revendication 7 pour lequel la structure (212) de type en relief comprend un logo de société et/ou des repères de positionnement.

9. Boîtier de capteur (2) selon une des revendications précédentes 1 à 8 pour lequel la face supérieure du corps de boîtier (21) est constituée comme une pyramide aplatie.

10. Boîtier de capteur (2) selon une des revendications précédentes 1 à 9 pour lequel le compartiment intérieur du boîtier (210) est constitué de forme parallélépipédique.

11. Boîtier de capteur (2) selon une des revendications précédentes 1 à 10 pour lequel le corps de boîtier (21) avec les pieds (20) est en métal ou en matière plastique.

12. Boîtier de capteur (2) selon une des revendications précédentes 1 à 11 avec un inclinomètre monté dans le corps de boîtier (21) qui est introduit par le bas dans le compartiment intérieur de boîtier (210) et est encastré dans une masse de remplissage.

13. Boîtier de capteur (2) selon la revendication 12 avec une plaque signalétique collée sur la surface supérieure ouverte vers le bas de la masse de remplissage.
